Europäisches Patentamt

European Patent Office

Office européen des brevets

(11) Veröffentlichungsnummer: **0 504 703 A2**

(12) **EUROPÄISCHE PATENTANMELDUNG**

(21) Anmeldenummer: **92104031.7**

(22) Anmeldetag: **09.03.92**

(51) Int. Cl.⁵: **H04R 25/00**

(30) Priorität: **21.03.91 DE 4109306**

(43) Veröffentlichungstag der Anmeldung:
**23.09.92 Patentblatt 92/39**

(84) Benannte Vertragsstaaten:
**CH DE DK IT LI**

(71) Anmelder: **SIEMENS AKTIENGESELLSCHAFT**
**Wittelsbacherplatz 2**
**W-8000 München 2(DE)**

(72) Erfinder: **Härtl, Christof**
**Rodensteinstrasse 2**
**W-8524 Neunkirchen(DE)**
Erfinder: **Müller, Jochen, Dr.**
**Kaltenbrunnerstrasse 20**
**W-8000 München 71(DE)**

(54) **Hörgerät mit in einem Batteriefach angeordneten elektrischen Kontaktmitteln.**

(57) Bei einem derartigen Hörgerät ist wenigstens ein weiteres Kontaktmittel zur elektrischen Verbindung eines extenen Programmiergerätes (5) mit wenigstens einem programmierbaren Hörgeräteteil (19) vorgesehen. Um den Platzbedarf für das weitere Kontaktmittel gering zu halten, sind im Batteriefach (2) im Bereich einer einem Batteriepol (15) gegenüberliegenden Fläche elektrisch gegeneinander isolierte Einzelkontakte ($A_1$ bis $A_4$) angeordnet, von denen wenigstens ein Einzelkontakt ($A_1$, $A_3$, $A_4$) mit einem programmierbaren Hörgeräteteil (19) elektrisch verbunden ist.

FIG 1

EP 0 504 703 A2

Die vorliegende Erfindung bezieht sich auf ein Hörgerät mit in einem Batteriefach angeordneten elektrischen Kontaktmitteln zur zweipoligen elektrischen Verbindung einer Batterie mit Hörgerätebauteilen und wenigstens einem weiteren Kontaktmittel zur elektrischen Verbindung eines externen Programmiergerätes mit wenigstens einem programmierbaren Hörgeräteteil.

Aus der deutschen Gebrauchsmusterschrift G 88 00 629 ist ein Hörgerät der eingangs genannten Art bekannt. In dem Batteriefach sind zusätzlich zu den beiden Batteriekontakten noch drei weitere Kontakte, z.B. Schleifkontakte angeordnet. Nach der bekannten Lösung sind diese zusätzlichen Buchsenkontakte in einem gesonderten, dem Batteriefach benachbarten Gehäuseabschnitt angeordnet. Diese drei weiteren Buchsenkontakte werden von einem in das Batteriefach einsetzbaren Stecker kontaktiert, der elektrisch mit einem externen Programmiergerät verbunden ist. Da auch die zusätzlichen Kontakte nebst einem die Kontakte haltenden Teil (Buchsenteil) im Batteriefach oder in dessen Umgebung anzuordnen sind, muß das Batteriefach größer als herkömmliche Batteriefächer bemessen werden.

Die deutsche Gebrauchsmusterschrift G 88 08 169 offenbart ein Hörgerät mit einem Batteriefach an dem unteren Ende des Hörgerätes, auf das ein Audioschuh aufschiebbar ist. An einer an das Batteriefach angrenzenden Innenseite des Audioschuhes sind drei mit einer Audioleitung verbindbare und gegeneinander isolierte Kontaktfedern angeordnet. Die Kontaktfedern weisen an ihren freien Enden Kontaktnoppen auf, welche Anschlußkontakte an dem unteren Ende des Hörgerätes berühren. Dadurch wird das Hörgerät direkt mit einer Hörsprechanlage oder einem Radio- bzw. Fernsehgerät verbunden.

Aus der US-PS 4,548,082 ist es bekannt, das Batteriefach steckbar mit einem Hörgerät zu verbinden. An der Schnittstelle zwischen dem steckbaren Batteriefach und dem Hörgerät sind vier Kontakte angeordnet. Diese vier Kontakte werden bei entferntem Batteriefach mit einem Stecker kontaktiert, der mit einem externen Programmiergerät verbunden ist. Zwei der Kontakte dienen zum Datenaustausch im simultanen Duplexbetrieb. Zwei weitere Kontakte sind Stromversorgungskontakte, über die das Hörgerät sowohl aus dem Programmiergerät als auch aus der Batterie mit Strom versorgt werden kann. Das steckbare Batteriefach muß intern noch zwei Kontaktmittel zum Kontaktieren der beiden Batteriepole aufweisen. Folglich sind bei diesem bekannten Hörgerät neben den im Batteriefach mit den Batteriepolen verbundenen Kontakten vier zusätzliche Kontakte an der Schnittstelle erforderlich, die entsprechenden Platz benötigen.

Der Erfindung liegt die Aufgabe zugrunde, ein Hörgerät der eingangs genannten Art zu schaffen, bei dem der Platzbedarf für zusätzliche Kontaktmittel gering ist.

Diese Aufgabe wird erfindungsgemäß durch die im Hauptanspruch genannten Merkmale gelöst. Die Erfindung geht von der Idee aus, den im Batteriefach vorhandenen Platz für Stromversorgungskontakte mehrfach zu nutzen. Dazu wird gemäß der Erfindung vorgeschlagen, wenigstens einen der erforderlichen bzw. vorhandenen Kontaktmittel für die Stromversorgung aus der Hörgerätebatterie in gegeneinander isolierte Einzelkontakte zu unterteilen. Durch diese Unterteilung eines ursprünglich großen Kontaktmittels in einzelne, aber kleine Kontaktmittel bleibt der Platzbedarf im Batteriefach im wesentlichen konstant. Folglich stehen erfindungsgemäß im Batteriefach zusätzliche Kontakte zur Verfügung, ohne daß dazu zusätzlicher Platz im Hörgerät benötigt wird. Das gilt insbesondere dann, wenn auch die Befestigung aller Einzelkontakte im Batteriefach in demjenigen Bereich vorgenommen wird, der bei eingesetzter Batterie der Kontaktfläche eines ebenen Batteriepoles gegenüberliegt.

Weitere Vorteile und Einzelheiten der Erfindung ergeben sich aus der nachfolgenden Beschreibung von Ausführungsbeispielen anhand der Zeichnungen und in Verbindung mit den Ansprüchen.

Es zeigen:

Figur 1 ein erfindungsgemäßes Hörgerät mit im Batteriefach angeordneten Einzelkontakten nebst einem passenden Verbindungsstück (Stecker);

Figur 2 ein Hörgerät gemäß Figur 1, wobei das gegenüberliegende Kontaktmittel gezeichnet ist;

Figur 3 ein Hörgerät gemäß Figur 1 mit Blick in das Batteriefach (Draufsicht);

Figur 4 Kontaktmittel des Hörgerätes gemäß Figur 1;

Figur 5 einen Einzelkontakt gemäß Figur 4 in Seitenansicht.

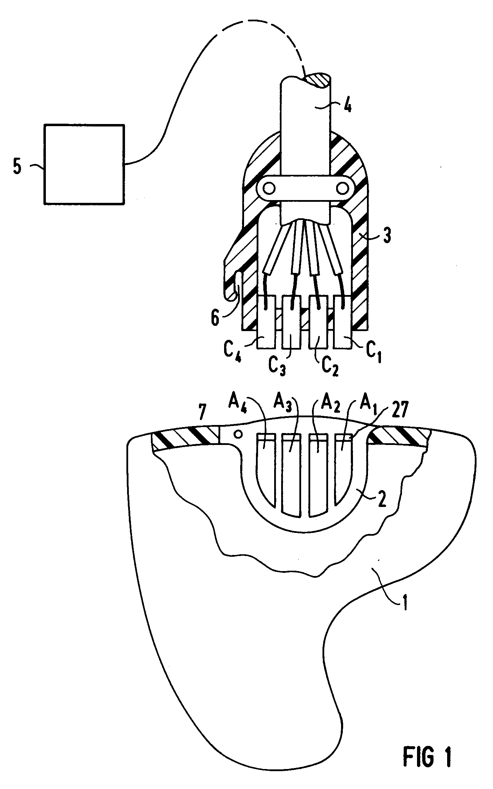

Figur 1 zeigt ein im Ohr tragbares Hörgerät 1 als Teilschnitt mit Blick auf ein Batteriefach 2. In dem Batteriefach sind Kontaktmittel angeordnet, die aus den Einzelkontakten $A_1$ bis $A_4$ gebildet sind. Die Einzelkontakte $A_1$ bis $A_4$ sind über korrespondierende Kontakte $C_1$ bis $C_4$ an einem als Stecker ausgebildeten Verbindungsstück 3 kontaktierbar. Das Verbindungsstück 3 ist über ein Kabel 4 mit einem externen Programmiergerät 5 verbunden. Das Verbindungsstück 4 weist eine Ausnehmung 6 auf, die beim Einführen des Verbindungsstückes 3 in das Batteriefach 2 in einen Zapfen 7 eingreift. Die Ausnehmung 6 und der Zapfen 7 können als Rast- und Schnappmechanismus zusammenwirken und bilden eine kontaktgenaue Führung für das Verbindungsstück 3, wenn dieses in das Batteriefach 2 eingeführt wird. Außerdem wird bei Ausbildung der Ausnehmung 6 und des Zapfens 7 als Schnappverbindung ein unbeabsichtigtes Lösen der elektrischen Steckverbindung während einer Datenübertragung zwischen dem Hörgerät 1 und dem externen Programmiergerät 5 vermieden.

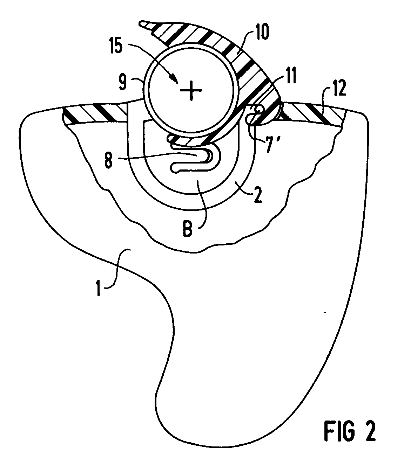

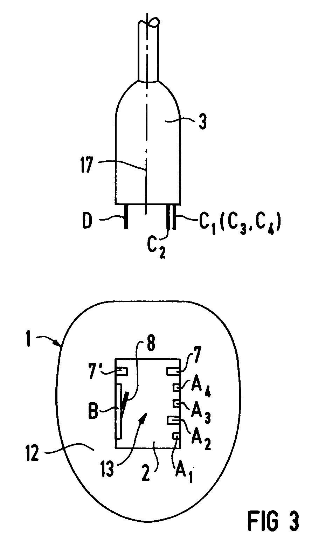

In Figur 2 ist das in Figur 1 dargestellte Hörgerät mit Blick auf die Seite des Batteriefaches 2 dargestellt, die den Kontaktmitteln $A_1$ bis $A_4$ gegenüberliegt. An dieser Seite des Batteriefaches 2 ist ein Kontaktmittel B angeordnet, dessen zungenförmige Feder 8 gegen einen Pol einer einsetzbaren Batterie 9 drückt. Die Batterie 9 wird von einer Batterielade 10 gehalten, die um den Zapfen 7 schwenkbar am Hörgerät 1 angeordnet ist. Der Zapfen 7 sowie ein Zapfen 7' (Figur 3) und eine Vertiefung 11 an der Batterielade 10 bilden ein lösbares Scharnier. Nach Aushängen der Batterielade 10 aus diesem Scharnier kann das in Figur 1 dargestellte Verbindungsstück 3 in das Batteriefach 2 eingeführt werden, wobei ein den Kontakten $C_1$ bis $C_4$ am Verbindungsstück 3 gegenüberliegender Kontakt D (Figur 3) mit dem Kontaktmittel B des Hörgerätes 1 kontaktiert wird.

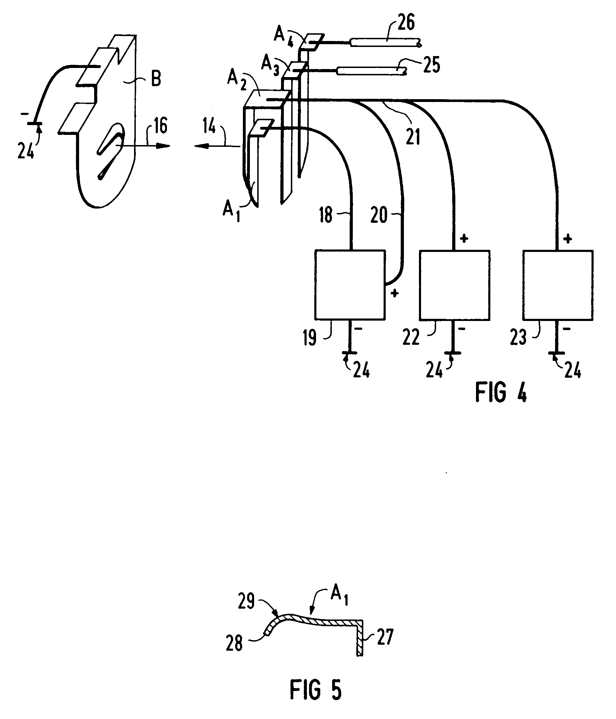

In Figur 3 ist das Batteriefach 2 des Hörgerätes 1 mit Blick auf die Faceplate 12 dargestellt. Von den Einzelkontakten $A_1$ bis $A_4$ ist ein Einzelkontakt $A_2$ gegenüber den übrigen Einzelkontakten $A_1$, $A_3$ und $A_4$ in Richtung auf den Hohlraum 13 des Batteriefaches 2 vorstehend angeordnet, vergleiche auch Pfeil 14 in Figur 4. Dadurch wird erreicht, daß beim Einsetzen der Batterie 9 nur dieser Einzelkontakt $A_2$ mit einem Pol der Batterie, z.B. dem Pluspol 15 (vgl. Figur 2), kontaktiert wird. Die zungenförmige Feder 8 an dem Kontaktmittel B ist ebenfalls in den Hohlraum 13 des Batteriefaches 2 vorstehend ausgebildet, vergleiche dazu auch Pfeil 16 in Figur 4. An dem in Figur 3 in Seitenansicht auch dargestellten Verbindungsstück 3 ist der mit dem Kontakt $A_2$ korrespondierende Kontakt $C_2$ gegenüber dem Kontakt $C_1$ und den dahinter liegenden (nicht sichtbaren) Kontakten $C_3$ und $C_4$ in Richtung auf eine Mittellinie 17 versetzt angeordnet. Dadurch können alle Kontakte am Verbindungsstück 3 mit allen Kontakten im Batteriefach 2 sicher und formschlüssig kontaktiert werden.

In Figur 4 sind die im Batteriefach 2 des erfindungsgemäßen Hörgerätes anordbaren Kontaktmittel B sowie $A_1$ bis $A_4$ detaillierter dargestellt. Der Einzelkontakt $A_1$ ist über eine Leitung 18 mit einem programmierbaren Hörgeräteteil 19 verbunden. Das programmierbare Hörgeräteteil 19 ist über eine gesonderte Leitung 20 mit dem Einzelkontakt $A_2$ verbunden, der zur Stromversorgung des Hörgerätes dient und in diesem Ausführungsbeispiel mit dem Pluspol 15 der Batterie 9 (Figur 2) verbindbar ist. Der Pluspol 15 der Batterie 9 ist über den Einzelkontakt $A_2$ und eine Leitung 21 auch mit weiteren Hörgerätebauteilen 22 und 23 verbunden. Die Hörgerätebauteile 19, 22 und 23 sind jeweils über eine Masseverbindung 24 mit dem Kontaktmittel B verbunden, das seinerseits mit dem anderen Pol der Batterie 9, in diesem Beispiel mit dem Minuspol, kontaktierbar ist. Dadurch ist eine zweipolige elektrische Verbindung zwischen der Batterie 9 und den Hörgerätebauteilen 19, 22 und 24 hergestellt. Da anstelle der Batterie auch das Verbindungsstück 3 in das Batteriefach kontaktgebend eingesetzt werden kann, ist sonach auch eine zweipolige Verbindung zur Stromversorgung zwischen dem externen Programmiergerät 5 und dem Hörgerät 1 herstellbar. Die beiden weiteren, in diesem Ausführungsbeispiel dargestellten Einzelkontakte $A_3$ und $A_4$ können ebenfalls mit dem programmierbaren Hörgeräteteil 19 über entsprechende Ein- oder Ausgänge (nicht dargestellt) oder mit anderen programmierbaren oder steuerbaren Hörgeräteteilen über Leitungen 25 und 26 verbunden werden.

Figur 5 zeigt beispielshaft den Einzelkontakt $A_1$ in einer Seitenansicht. Ein abgewinkeltes Ende 27 des Kontaktes $A_1$ ist in diesem Ausführungsbeispiel im eingebauten Zustand der Öffnung des Batteriefaches 2 zugewandt, vergleiche auch Figuren 4 und 1. Dies abgewinkelte Ende 27 kann auch zur Befestigung des Einzelkontaktes 27 an dem Hörgerät 1 benutzt werden. Des weiteren kann an diesem abgewinkelten Ende 27 die Verbindungsleitung 18 (Figur 4) angeschlossen werden. Ein dem abgewinkelten Ende 27 gegenüberliegendes Ende weist eine gewölbte Erhöhung (fingerkuppenartig) auf, die im eingebauten Zustand des Kontaktes $A_1$ in Richtung des Hohlraumes des Batteriefaches gerichtet ist (Richtung des Pfeiles 14 in Figur 4). Die übrigen Einzelkontakte $A_2$ bis $A_4$ sind in diesem Ausführungsbeispiel genauso ausgebildet wie der beschriebene Kontakt $A_1$.

Wenn in dem Hörgerät 1 das programmierbare Hörgerätebauteil 19 Eingänge aufweist, die auf Gleichspannung nicht ansprechen, erübrigt es sich, die Programmierkontakte $A_1$, $A_3$ und $A_4$ gegenüber dem Stromversorgungskontakt $A_2$ versetzt anzuordnen. Es können dann vielmehr alle Einzelkontakte $A_1$ bis $A_4$ in einer Ebene angeordnet werden. Darüber hinaus sind auch andere erfindungsgemäße Ausgestaltungen des Hörgerätes möglich.

**Patentansprüche**

1. Hörgerät mit in einem Batteriefach (2) angeordneten elektrischen Kontaktmitteln (A und B) zur zweipoligen elektrischen Verbindung einer Batterie (9) mit Hörgerätebauteilen (19, 22, 23) und wenigstens einem weiteren Kontaktmittel zur elektrischen Verbindung eines externen Programmiergerätes (5) mit wenigstens einem programmierbaren Hörgeräteteil (19), wobei im Batteriefach (2) im Bereich einer einem Batteriepol (15) gegenüberliegenden Fläche elek-

trisch gegeneinander isolierte Einzelkontakte ($A_1$ bis $A_4$) angeordnet sind, von denen wenigstens ein Einzelkontakt ($A_1$, $A_3$, $A_4$) mit einem programmierbaren Hörgeräteteil (19) elektrisch verbunden ist.

2. Hörgerät nach Anspruch 1, bei dem alle Einzelkontakte ($A_1$ bis $A_4$) in einem Bereich im Batteriefach (2) am Hörgerät (1) befestigt sind, der der Kontaktfläche eines Poles (15) der eingesetzten Batterie (9) gegenüberliegt.

3. Hörgerät nach Anspruch 1 oder 2, bei dem ein mit einem Pol (15) der Batterie (9) kontaktierbarer Einzelkontakt ($A_2$) gegenüber den übrigen Einzelkontakten ($A_1$, $A_3$, $A_4$) in den Hohlraum (13) des Batteriefaches (2) vorragend ausgebildet ist.

4. Hörgerät nach einem der Ansprüche 1 bis 3, bei dem die mit programmierbaren Hörgeräteteilen (19) verbundenen Einzelkontakte ($A_1$, $A_3$, $A_4$) und die übrigen Kontaktmittel ($A_2$ und B) gemeinsam und mehrpolig über ein mit dem externen Programmiergerät (5) verbundenes und in das Batteriefach (2) einführbares Verbindungsstück (3) verbindbar sind.

5. Hörgerät nach Anspruch 4, bei dem das Verbindungsstück (3) eine Ausnehmung (6) aufweist, in die ein Zapfen (7, 7') eines Scharnieres der Batterielade (10) des Hörgerätes (1) zur kontaktgenauen Führung des Verbindungsstückes (3) einführbar ist.

6. Hörgerät nach einem der Ansprüche 1 bis 5, wobei die Einzelkontakte ($A_1$ bis $A_4$) als vier dem Pluspol (15) der eingesetzten Batterie (9) zugewandte Einzelkontakte ausgebildet sind.

7. Hörgerät nach einem der Ansprüche 1 bis 6, wobei die Einzelkontakte ($A_1$ bis $A_4$) zungenförmig und federnd ausgebildet sind.

8. Hörgerät nach einem der Ansprüche 1 bis 7, wobei die Einzelkontakte ($A_1$ bis $A_4$) mit ihren der Öffnung des Batteriefaches (2) zugewandten Enden (27) am Hörgerät (1) befestigt sind und an ihren der Öffnung des Batteriefaches (2) abgewandten Enden (28) gewölbte, in Richtung des Hohlraumes (13) des Batteriefaches (2) gerichtete Erhöhungen (29) aufweisen.

FIG 1

FIG 2

17 — 3

D — C₁(C₃,C₄)

C₂

1

7' — 8 — 7

B — A₄
A₃
A₂

12 — 13 — 2 — A₁

FIG 3

FIG 4

FIG 5